# EUROPÄISCHE PATENTSCHRIFT

(11) **EP 2 588 291 B1**
(45) Veröffentlichungstag und Bekanntmachung des Hinweises auf die Patenterteilung: **16.03.2016**
(21) Anmeldenummer: 11729978.4
(22) Anmeldetag: 01.07.2011
(51) Int. Cl.: B29C 45/14, B29C 45/00, B29C 45/16

(54) **VERFAHREN ZUR HERSTELLUNG VON FORMTEILEN**
PROCESS FOR PRODUCING MOULDED PARTS
PROCÉDÉ DE FABRICATION DE PIÈCES MOULÉES

(30) Priorität: 02.07.2010 DE 102010030911
(43) Veröffentlichungstag der Anmeldung: 08.05.2013
(73) Patentinhaber: Kunststoff-Technik Scherer & Trier GmbH & Co. KG, 96247 Michelau (DE)
(72) Erfinder: TRIER, Martin, 96247 Michelau (DE)
(74) Vertreter: Weickmann & Weickmann
(86) Internationale Anmeldenummer: PCT/EP2011/061121
(87) Internationale Veröffentlichungsnummer: WO 2012/001146

(56) Entgegenhaltungen:
- EP-A1- 2 295 293
- JP-A- 63 268 612
- US-A1- 2007 102 110
- US-A1- 2008 070 039
- EHRIG F ET AL: "Folientechnik f}r metallische Oberfl{chen", KUNSTOFFE INTERNATIONAL, CARL HANSER VERLAG, MUNCHEN, DE, Nr. 11, 1. Januar 2007 (2007-01-01), Seiten 72-74, XP008090065, ISSN: 0023-5563

## Beschreibung

Die vorliegende Erfindung betrifft ein Verfahren zur Herstellung von Formteilen, insbesondere Kraftfahrzeugformteilen, wobei jedes Formteil auf einer Sichtseite des Formteils ein Deckteil aufweist, welches mit einem Kunststoffmaterial hinterspritzt ist, und wobei zwischen dem Deckteil und dem hinterspritzten Kunststoffmaterial eine Folie angeordnet ist.

Formteile der vorstehend genannten Art finden vielfältige Verwendung als Verkleidungselemente, Zierelemente, Abdeckungen oder dergleichen. Sie werden insbesondere bei Fahrzeugen eingesetzt, um Teile der Fahrzeugkarosserie oder des Innenraums des Fahrzeugs zu verkleiden oder zu verzieren. Eine den hinterspritzten Kunststoff aufweisende Seite des Formteils dient zumeist der Montage des Formteils an einer übergeordneten Struktur, beispielsweise einer Fahrzeugkarosserie, während die dem hinterspritzten Kunststoff abgewandte Seite des Deckteils als Sichtfläche ausgebildet ist, beispielsweise Zierelemente oder Schriftzüge trägt oder eine Hochglanzoberfläche aufweist.

Für viele Anwendungen wird eine metallische Sichtfläche bevorzugt, so dass als Deckteil ein Metallblech zum Einsatz kommt. Da sich der eingespritzte Kunststoff jedoch nicht ohne Weiteres in ausreichender Festigkeit mit dem Metall des Deckteils verbindet, ist es bekannt, die Innenseite des Deckteils mit einem Haftvermittler zu versehen, der eine stoffschlüssige Verbindung sowohl mit dem Metall des Deckteils als auch mit dem hinterspritzten Kunststoff eingehen kann. So schlägt die FR 2 244 618 ein Verfahren vor, in welchem eine Folie zwischen dem Deckteil und dem einzuspritzenden Kunststoff angeordnet wird, um eine feste Verbindung zwischen dem Kunststoff und dem Deckteil sicherzustellen.

Alternativ ist es bekannt, eine Innenseite des Deckteils mit einem Haftlack zu versehen, welcher bei Überschreiten einer vorbestimmten Temperatur aktivierbar ist, um eine stoffschlüssige Verbindung zwischen einem thermoplastischen Spritzgusskunststoff und dem Metall des Deckteils herzustellen. Es sind dann jedoch relativ aufwendige Maßnahmen notwendig, um den Haftlack unmittelbar vor dem Einspritzen des Kunststoffs zu erhitzen. Beispielsweise ist es bekannt, eine Spritzgussform, in die das Deckteil zum Hinterspritzen eingelegt wird, zu erhitzen, um den Haftlack zu aktivieren. Die Erhitzung der Formhälfte und anschließend notwendige Abkühlung ist jedoch relativ energieaufwendig und führt zu deutlich verlängerten Zykluszeiten.

Abhängig vom Verwendungszweck ist es bekannt, in dem Deckteil mindestens einer Ausnehmung anzuordnen, beispielsweise zur Darstellung einer Verzierung, eines Schriftzeichens oder dergleichen. So sind Zierleisten für Kraftfahrzeuge bekannt, welche eine Mehrzahl von Durchgangsöffnungen zur Darstellung eines den Markennamen des Fahrzeugs repräsentierenden Schriftzuges aufweisen, so dass der im Bereich der Ausnehmungen freigelegte Kunststoff mit sichtbarem Kontrast gegenüber dem Deckteil abgesetzt ist. Wenn darüber hinaus eine Beleuchtungsanordnung hinter dem Spritzgusskunststoff angeordnet ist und der Kunststoff aus einem transparenten Material gebildet ist, so kann das Licht der Beleuchtungseinrichtung durch den Kunststoff hindurch und durch die Ausnehmungen im Deckteil aus dem Formteil austreten und der durch die Ausnehmungen dargestellte Schriftzug kann als beleuchteter Schriftzug gestaltet werden.

Das Hinterspritzen von Deckteilen, die Ausnehmungen aufweisen, führt in der Praxis zu dem Problem, dass beim Einspritzen des Kunststoffs in die Spritzgussform plastifizierter Kunststoff durch die Ausnehmungen hindurch tritt und in den Zwischenraum zwischen der Außenseite des Deckteils und der Innenseite der Spritzgussform eindringt. Dies führt zu einer unerwünschten Verformung und Beeinträchtigung der Sichtfläche im Bereich des eingedrungenen Kunststoffs.

JP-A-63268612 offenbart ein Verfahren gemäß dem Oberbegriff des Anspruchs 1, in welchem Formteile, die auf einer Sichtseite ein Deckteil aufweisen, aus einem Bandmaterial hergestellt werden und mit einem Kunststoffmaterial hinterspritzt werden.

US-A-20070102110 offenbart ein Verfahren, in welchem ein Formteil, welches aus einem mit einem Kunststoffmaterial hinterspritzten Bandmaterial besteht, nach dem Formen aus der Form entnommen wird und getrennt von der Form nachbearbeitet wird, um einen Randabschnitt des Formteils abzutrennen.

Vor diesem Hintergrund ist es Aufgabe der vorliegenden Erfindung, ein Verfahren zur Herstellung von Formteilen anzugeben, welches einfach und effektiv arbeitet und ein Formteil herstellt, ohne dass Einbußen in der Oberflächenqualität des Formteils in Kauf genommen werden müssen.

Diese Aufgabe wird erfindungsgemäß gelöst durch ein Verfahren nach Anspruch 1.

Gemäß der Erfindung werden sowohl die Deckteile mehrerer nacheinander hergestellter Formteile als auch die Folie jeweils als kontinuierliche Bandmaterialien zugeführt, so dass auch große Stückzahlen in einem kontinuierlichen oder quasi-kontinuierlichen Fertigungsbetrieb hergestellt werden können. Das Trennen der einzelnen Formteile von dem Bandmaterial erfolgt erst in einem relativ späten Stadium des Verfahrens, insbesondere nach Durchlaufen der Spritzgussform. Da der Transport eines zusammenhängenden Materials mit vergleichsweise einfachen Mitteln positionsgenau möglich ist, kann diese Maßnahme zur Einsparung von technischem Aufwand in der Fertigungsanlage beitragen. Insbesondere können Greifwerkzeuge zum

Überführen einzelner Formteile zwischen den Bearbeitungsstationen eingespart werden; stattdessen läuft ein kontinuierliches Materialband durch zumindest eine Mehrzahl der Bearbeitungsstationen.

Das Verfahren umfasst die Schritte: Herstellen mindestens einer Ausnehmung in dem Deckteil, Aufbringen der Folie auf das Deckteil, so dass die Folie die mindestens eine Ausnehmung des Deckteils überdeckt, sowie Hinterspritzten der Folie mit dem Kunststoffmaterial.

Gemäß der Erfindung wird demnach eine Ausnehmung im Deckteil von einer Folie überdeckt. Auf diese Weise kann beim Einspritzen des Kunststoffs die Folie sowohl im Bereich des Deckteils als auch im Bereich der mindestens einen Ausnehmung hinterspritzt werden und ein Hindurchtreten von plastifiziertem Kunststoff durch die mindestens eine Ausnehmung sowie ein Eindringen in den Zwischenraum zwischen der Außenseite des Deckteils und der Innenseite der Spritzgussform kann verhindert werden. Aber auch dann, wenn die Außenseite des Deckteils nicht von der Spritzgussform gehalten wird, sondern im Wesentlichen frei liegt, kann die die mindestens eine Ausnehmung überspannende Folie ein Austreten des Kunststoffs durch die Ausnehmung hindurch verhindern. Im Ergebnis kann das Verfahren zuverlässig und effektiv ablaufen und die Herstellung eines Formteils ohne Qualitätseinbußen im Bereich seiner Sichtfläche ermöglichen.

Die Verwendung der Folie erlaubt eine feste und sichere stoffschlüssige Verbindung zwischen dem Material des Deckteils und dem eingespritzten Kunststoff, so dass ein stabiles Formteil erhalten werden kann. Ferner kann die Folie ungeachtet der mindestens einen Ausnehmung über die Innenseite des Deckteils aufgebracht werden, d.h. die Folie kann trotz der aufgrund der Ausnehmung relativ komplizierten Form des Deckteils eine einfache Form aufweisen, insbesondere eine durchgehende Lage oder Bahn sein, und somit kostengünstig bereitgestellt werden. Auch das Aufbringen der Folie auf das Deckteil gestaltet sich einfach, da die Folie einfach über die mindestens eine Ausnehmung hinweg geführt werden kann. Insbesondere ist es nicht notwendig, die mindestens eine Ausnehmung des Deckteils auch in der Folie vorzusehen. Insgesamt läuft das erfindungsgemäße Verfahren somit effizient und kostengünstig ab.

In einer bevorzugten Ausführungsform der Erfindung ist das Deckteil zum Hinterspritzen in einer Spritzgussform angeordnet, wobei eine dem Deckteil zugewandte Innenfläche der Spritzgussform die mindestens eine Ausnehmung überdeckt. Damit kann erreicht werden, dass beim Hinterspritzen des Deckteils der eingefüllte, plastifizierte Kunststoff im Bereich der mindestens einen Ausnehmung die Folie etwas nach außen in die mindestens eine Ausnehmung hinein drückt, wobei sich die Folie dann an die Innenfläche der Spritzgussform anlegt und die Kontur der Innenfläche der Spritzgussform annimmt. Somit erhält die Folie mit dem hinterspritzten Kunststoff eine definierte Form entsprechend der Innenfläche der Spritzgussform. Insbesondere kann mit dieser Ausführungsform des erfindungsgemäßen Verfahrens ein Formteil hergestellt werden, dessen Oberflächen im Bereich des Deckteils und im Bereich der mindestens einen Ausnehmung im Wesentlichen zueinander kontinuierliche Konturen aufweisen. Mit anderen Worten, es wird eine

Oberfläche des Deckteils in einem der mindestens einen Ausnehmung benachbarten Bereich im Wesentlichen kontinuierlich durch eine Oberfläche der mit Kunststoff hinterspritzten Folie innerhalb der Ausnehmung fortgesetzt, so dass sich eine im Wesentlichen ebene Gesamtoberfläche des Formteils ergibt.

Vorzugsweise wird die Folie auf der der Sichtseite abgewandten Innenseite des Deckteils durch Laminieren oder Kaschieren aufgebracht. Das Laminieren bzw. Kaschieren kann beispielsweise unter Verwendung einer Walze zum Andrücken der Folie an das Deckteil stattfinden. Ist eine aktive Fläche der Walze größer als eine Abmessung der mindestens einen Ausnehmung, so kann die mindestens eine Ausnehmung von der Walze einfach überrollt werden, so dass die Folie die Ausnehmung überdeckt. Um ein zwischen Folie und Deckteil angeordnetes Haftmittel zu aktivieren, können die Folie oder/und das Deckteil erhitzt werden. Alternativ kann ein ohne Aktivierung verwendbares Haftmittel zwischen Folie und Deckteil zum Einsatz kommen, so dass auf besondere Mittel zum Aktivieren des Haftmittels, insbesondere zur Erhitzung des Haftmittels, verzichtet werden kann.

Besonders bevorzugt erfolgt der Schritt des Hinterspritzens in einer Spritzgussform und die Folie wird vor dem Erreichen der Spritzgussform auf der Innenseite des Deckteils durch Laminieren oder Kaschieren aufgebracht. Erfolgt das Laminieren/Kaschieren der Folie auf dem Deckteil vor dem Erreichen der Spritzgussform, so kann der Schritt des Laminierens/Kaschierens in einer separaten Laminier/Kaschierstation erfolgen, insbesondere parallel zum Hinterspritzen eines anderen Formteils, so dass Zykluszeit eingespart werden kann. Ein besonderer Vorteil ergibt sich bei der Verwendung eines Temperatur-aktivierbaren Haftlacks zwischen Deckteil und Folie. Der Haftlack könnte dann in der separaten Laminier-/Kaschierstation mit spezialisierten und effizienten Werkzeugen erhitzt und damit aktiviert werden, beispielsweise über beheizbare Laminier-/Kaschierwalzen, so dass eine zeitaufwendige und energieintensive Erhitzung innerhalb der Spritzgussform entfallen kann. Beim Eintritt in die Spritzgussform sind dann Deckteil und Folie bereits fest miteinander verbunden.

Mit besonderem Vorteil kann das Verfahren der vorliegenden Erfindung ferner ein Formteil herstellen, dessen Deckteil mindestens eine Deckteilinsel aufweist, welche durch die mindestens eine Ausnehmung vom übrigen Bereich des Deckteils getrennt ist. Solche Deckteilinseln ergeben sich beispielsweise bei der Gestaltung von Ausnehmungen in der Form von Buchstaben, wie "A" oder "B", bei welchen die die Buchstaben abbildenden Ausnehmungen einen Abschnitt des Deckteils vollständig umlaufen, so dass Teile des Deckteils als Deckteilinseln verbleiben. In einer bevorzugten Ausführungsform des erfindungsgemäßen Verfahrens können solche Deckteilinseln besonders präzise und gleichzeitig einfach gehandhabt werden, indem die mindestens eine Deckteilinsel mit der Folie in Verbindung gebracht wird und während des Schritts des Hinterspritzens des Deckteils von der Folie in Position gehalten wird. Die Folie kann dann die zusätzliche Aufgabe übernehmen, die Deckteilinseln während des Hinterspritzens oder ggf. auch während des Transports des Deckteils zu einer Spritzgussstation, in korrekter Position festzuhalten. Spezielle Haltemittel zum Halten der Deckteilinseln können somit eingespart werden und eine Positionierung der Deckteilinseln kann zudem mit hoher Präzision erfolgen.

Neben ihrer Funktion als Haftvermittler und ggf. als Haltemittel für Deckteilinseln kann der Folie eine weitere Funktion zum Schutz des darunter angeordneten, hinterspritzten Kunststoffs zukommen. Wenn insbesondere die Oberfläche die Folie höhere mechanische Stabilität, insbesondere höhere Kratzfestigkeit aufweist, als die Oberfläche des hinterspritzten Kunststoffmaterials, so kann der Verschleiß des Formteils reduziert werden, ohne die Gestaltungsfreiheit im Hinblick auf die mindestens eine Ausnehmung einzuschränken. Alternativ oder zusätzlich kann die Folie besondere optische, physikalische, chemische, oder haptische Eigenschaften aufweisen und damit insbesondere Dekorfunktion übernehmen.

In einer weiteren bevorzugten Ausführungsform können der hinterspritzte Kunststoff und die Folie lichtdurchlässig oder halblichtdurchlässig sein, so dass Licht einer Beleuchtungseinrichtung durch den hinterspritzten Kunststoff und die Folie zumindest teilweise hindurch treten kann, um durch die mindestens eine Ausnehmung auszutreten. Außerdem könnten der hinterspritzte Kunststoff oder/und die Folie lumineszierende Eigenschaften aufweisen, d.h. selbst eine Lichtquelle bilden, von der aufgrund von Elektrolumineszenz, oder Fluoreszenz oder Phosphoreszenz Licht ausgeht und durch die Folie hindurch aus der mindestens einen Ausnehmung austritt. Mit den vorstehend genannten Varianten der Erfindung kann ein Formteil mit beleuchteten Ausnehmungen, z.B. einem beleuchteten Schriftzug, hergestellt werden.

Wie bereits erwähnt, kann die mindestens eine Ausnehmung in dem erfindungsgemäßen Verfahren durch Ausstanzen hergestellt sein, wodurch Kostenvorteile insbesondere bei der Herstellung größerer Stückzahlen zu erreichen sind. Alternativ oder zusätzlich könnten Ausnehmungen durch Bohren oder/und Schneiden oder/und Sägen hergestellt werden. Besonders präziese kann die Herstellung der mindestens einen Ausnehmung durch Laserschnitt erfolgen, es sind prinzipiell jedoch alle dem Fachmann bekannten Trennverfahren geeignet. Da die Folie erst nach dem Schritt der Herstellung der mindestens einen Ausnehmung an dem Deckteil angebracht wird, kann die Herstellung der Ausnehmung mit einfachen, insbesondere herkömmlichen Mitteln ohne besondere Vorkehrungen zur Vermeidung einer Beschädigung der Folie erfolgen, so dass das verwendete Werkzeug zur Herstellung der Ausnehmung das Material des Deckteils zuverlässig vollständig durchtrennen kann.

Die Erfindung wird nachfolgend anhand bevorzugter Ausführungsbeispiele unter Bezugnahme auf die beigefügten Zeichnungen näher erläutert. Es zeigen:
- Figur 1: eine Draufsicht auf ein Formteil;
- Figur 2: eine Schnittansicht des in Figur 1 gezeigten Formteils gemäß einer Schnittlinie II-II in Figur 1;
- Figur 3: eine Schnittansicht des in Figur 1 gezeigten Formteils gemäß einer Schnittlinie III-III in Figur 1;
- Figur 4: eine schematische Gesamtdarstellung einer Fertigungsanlage zur Herstellung des in Figur 1 gezeigten Formteils gemäß einem Verfahren nach einem Ausführungsbeispiel der vorliegenden Erfindung;
- Figuren 5 bis 7: unterschiedliche Formteile, jeweils in einer Teilschnittansicht entsprechend Figur 2.

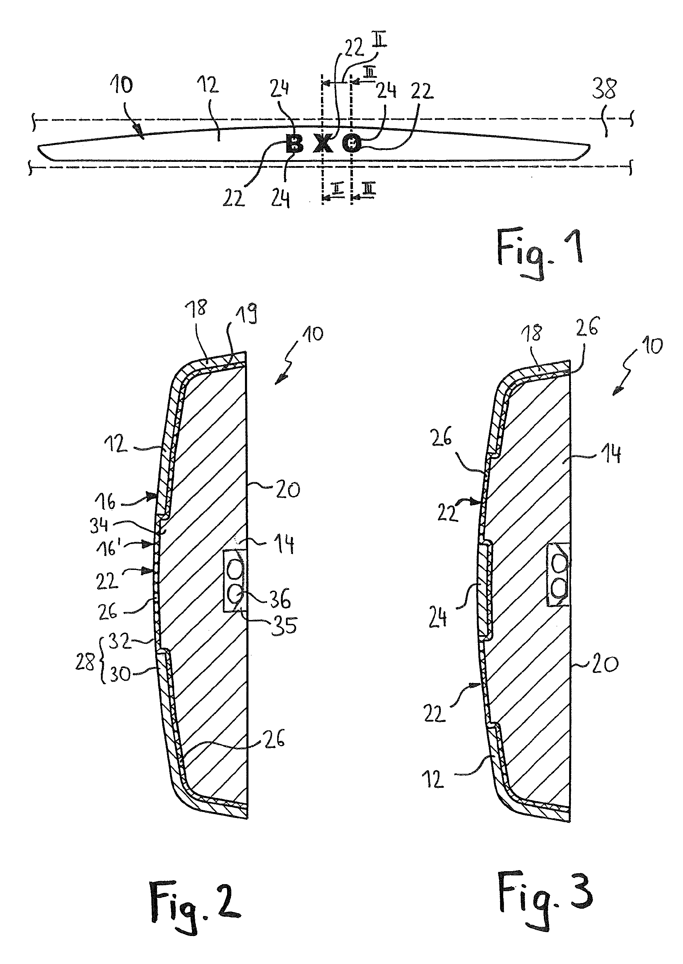

Ein allgemein mit 10 bezeichnetes Formteil ist in Figuren 1 bis 3 dargestellt und umfasst ein Deckteil 12 und ein Trägerteil 14. Das Deckteil 12 bildet an seiner Außenseite eine Sichtfläche 16 mit einer dementsprechend optisch hochwertigen Oberfläche. Dagegen dient das Trägerteil 14 vorzugsweise der Montage des Formteils 10 an einer übergeordneten Struktur und kann dazu beispielsweise Montageabschnitte, wie Montagelöcher oder Vorsprünge oder dergleichen aufweisen. Insbesondere wird an eine Montage des Formteils 10 mittels Clipkäfig, Pins oder auch Klebebändern gedacht.

Das Formteil 10 kann eine im Türschwellenbereich einer Fahrzeugtür eines Fahrzeugs zu montierende Einstiegsleiste sein. Für einen hochwertigen optischen Eindruck werden in diesem Bereich Zierelemente mit metallischer Oberfläche bevorzugt. Im Beispiel ist das Deckteil 12 ein Metallblech, z.B. ein Aluminiumblech.

Das Formteil 10 kann insgesamt eine längliche Gestalt aufweisen, wobei im Beispiel das Deckteil 12 konvex, schalenförmig gekrümmt ist und insbesondere auch Randabschnitte 18 des Deckteils 12 Randabschnitte 19 des Trägerteils 14 überdecken. Jede andere Form des Deckteils 12, einschließlich beispielsweise konkaver Teilabschnitte, ist jedoch ebenfalls denkbar. Ist das Formteil 10 mit einer der Sichtfläche 16 abgewandten Montagefläche 20 des Trägerteils 14 an einer übergeordneten Struktur, beispielsweise einem Abschnitt einer Fahrzeugkarosserie, befestigt, so ist im Wesentlichen nur die durch das Deckteil 12 gebildete Sichtfläche 16 zu sehen.

Das Deckteil 12 weist mindestens eine Ausnehmung 22 in seiner Sichtfläche 16 auf. In dem Beispiel der Figuren 1 bis 3 sind eine Mehrzahl von Ausnehmungen 22 entsprechend der Kontur der Buchstaben B, X und O als entsprechende Durchgangslöcher durch das Deckteil 12 vorgesehen. Selbstverständlich können durch entsprechende Ausnehmungen beliebige andere Schriftzüge, Zeichen, Muster oder Zierelemente dargestellt werden.

Wenn eine Ausnehmung 22 des Deckteils 12 einen Abschnitt des Deckteils 12 vollständig umläuft, wie dies beispielsweise bei den Buchstaben B und O im Beispiel der Fall ist, so umläuft die Ausnehmung 22 eine Deckteilinsel 24, d.h. einen Abschnitt des Deckteils 12, der keine Verbindung mit anderen Teilen des Deckteils 12 hat, insbesondere vom Hauptteil des Deckteils 12, in welchem die Ausnehmungen 22 eingebracht sind, getrennt ist. Wie in Figur 1 zu erkennen ist, bildet beispielsweise die Ausnehmung 22 zur Darstellung des Buchstaben B zwei Deckteilinseln 24 und die Ausnehmung 22 zur Darstellung des Buchstabens O umläuft eine zentrale Deckteilinsel 24, welche in Figur 3 im Schnitt dargestellt ist.

In Figuren 2 und 3 ist ferner zu erkennen, dass zwischen dem Deckteils 12 und dem Trägerteil 14 eine Folie 26 angeordnet ist. Die Folie 26 erstreckt sich im Wesentlichen über die gesamte Grenzflächen zwischen Deckteil 12 und Trägerteil 14. Die Folie 26 erstreckt sich aber auch über die Ausnehmungen 22 des Deckteils 12 hinweg. Das bedeutet, dass die Folie 26 im Bereich der Ausnehmungen 22 eine Sichtfläche 16' des Formteils 10 bildet.

Wie in Figuren 2 und 3 zu erkennen ist, verlaufen die Sichtfläche 16 des Deckteils 12 in einem der Ausnehmung 22 benachbarten Abschnitt und die Sichtfläche 16' der Folie 26 im Bereich der Ausnehmung 22 zueinander im Wesentlichen kontinuierlich. Insbesondere tritt in einem Übergangsabschnitt 28 zwischen einem die Ausnehmung 22 begrenzenden Randabschnitt 30 des Deckteils 12 und einem Randabschnitt 32 der in der Ausnehmung 22 angeordneten Folie 26 keine Stufe, Schulter oder ein Knick auf, sondern die Oberfläche des Formteils 12 setzt sich von der Sichtfläche 16 des Deckteils 12 im Wesentlichen gleichmäßig oder kontinuierlich in die Sichtfläche 16' der in der Ausnehmung 22 angeordneten Folie 26 fort. Um dies zu erreichen, ist die Folie 26 im Bereich der Ausnehmung 22 ein Stück weit (nämlich um den Betrag der Dicke des Deckteils 12) in die Ausnehmung 22 eingestülpt. Im Beispiel ist die Dicke der Folie 26 kleiner als die Dicke des Deckteils 12, so dass auch ein Vorsprung 34 des Trägerteils 14 in die Ausnehmung 22 hineinragt, wobei die Vorsprungshöhe des Vorsprungs 34 der Differenz zwischen der Dicke des Deckteils 12 und der Dicke der Folie 26 entspricht. Insgesamt ergibt sich somit im Wesentlichen eine glatte und stufenfreie sichtbare Oberfläche des Formteils 10.

Auf der dem Deckteil 12 abgewandten Seite des Trägerteils 14 kann eine Beleuchtungsvorrichtung 35 angeordnet sein, welche im Beispiel eine Mehrzahl von Leuchtelementen 36, vorzugsweise Leuchtdioden, umfasst. In diesem Zusammenhang können das Trägerteil 14 und die Folie 26 aus einem transparenten oder halbtransparenten Kunststoffmaterial gebildet sein, so dass von der Beleuchtungsvorrichtung 35 abgegebenes Licht durch das Trägerteil 14 und die Folie 26 hindurch aus den Ausnehmungen 22 austreten kann. Die Ausnehmungen 22 und insbesondere der durch diese gebildete Schriftzug erscheinen dann beleuchtet.

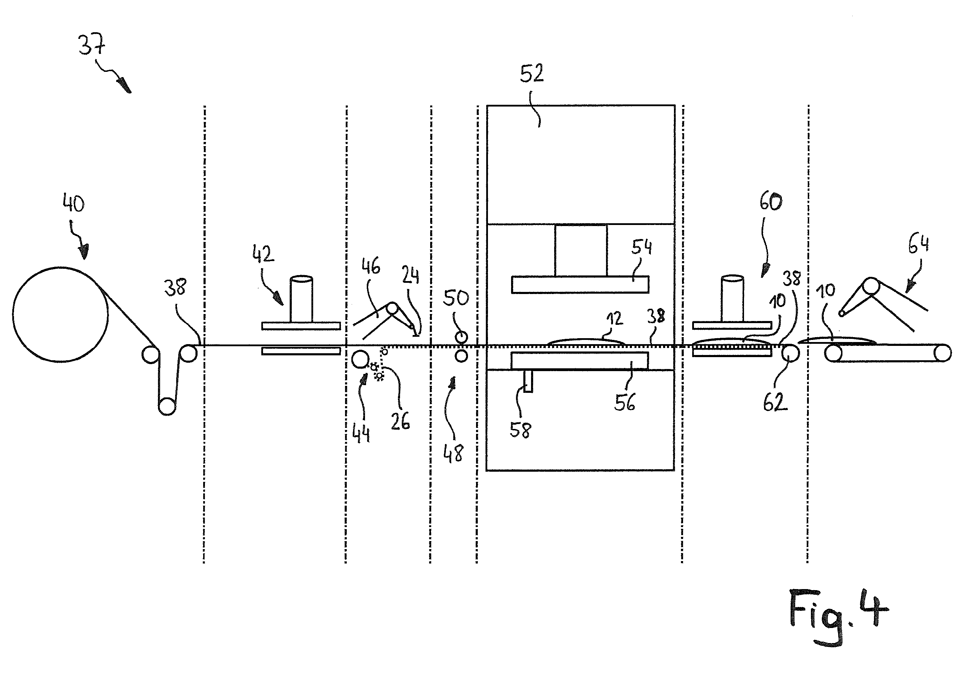

Nachfolgend wird ein erfindungsgemäßes Ausführungsbeispiel für ein Verfahren zur Herstellung des Formteils 10 unter Bezugnahme auf Figur 4 beschrieben. Figur 4 zeigt Stationen des Verfahrens in schematischer oder piktogrammartiger Darstellung.

In einer in Figur 4 gezeigten Fertigungsanlage 37 wird ein Metallband 38 von einer Bandzuführung 40 kontinuierlich zugeführt und durchläuft eine Stanzstation 42, in welcher die Ausnehmungen 22 aus dem Metall 38 ausgestanzt werden. Für das in Figur 1 gezeigte Beispiel werden drei Ausnehmungen zur Darstellung der Buchstaben B, X und O ausgestanzt, woraufhin das Metallband 38 um einen mindestens der Länge des zu fertigenden Formteils 10 entsprechenden Betrag weiter gezogen wird, um die Ausnehmungen 22 des nächsten Formteils 10 auszustanzen. Alternativ könnten die Ausnehmungen 22 durch Sägen, Bohren, mittels Laserschnitt oder anderen Verfahren eingebracht werden.

In einem nächsten Schritt des Verfahrens wird Folie 26 als Bahnmaterial von einer Folienzuführung 44 kontinuierlich zugeführt und im Ausführungsbeispiel gemäß Figur 4 von unten in Kontakt mit dem Metallband 38 gebracht. Die Folie 26 ist vorzugsweise ein kontinuierliches, durchgehendes Band, dessen Breite vorzugsweise der Breite des Metallbands 38 entspricht und somit das Metallband 38 im Wesentlichen vollständig überdeckt. Insbesondere läuft die Folie 26 über die zuvor gestanzten Ausnehmungen 22 hin weg.

Anschließend werden in einem weiteren Verfahrensschritt die von der Stanzeinrichtung 42 ausgestanzten Deckteilinseln 24 wieder an ihrer korrekten Position im Metallband 38 angeordnet, d.h. an der Position, an der sie vor dem Ausstanzen positioniert waren. Dazu kann ein durch einen Roboterarm 46 angesteuertes Greifwerkzeug verwendet werden. Da zuvor die Folie 26 unter dem Metallband 38 angeordnet wurde, können die Deckteilinseln 24 nun auf der Folie 26 aufliegen und so zusammen mit dem Metallband 38 und der Folie 26 weiter transportiert werden. Denkbar sind ferner zusätzliche Maßnahmen, um die Deckteilinseln 24 provisorisch an ihrer Sollposition zu fixieren, beispielsweise provisorisch an der Folie 26 anzukleben.

In einem darauf folgenden Verfahrensschritt kann die Folie 26 mit der die Innenseite des Deckteils 12 bildenden Seite des Metallbands 38 (Unterseite in Figur 4) durch Laminieren oder Kaschieren in einer Laminier-/Kaschierstation 48 verbunden werden. Bevorzugt wird dafür insbesondere ein Laminierverfahren oder ein Kaschierverfahren unter Vermittlung eines zwischen der Folie 26 und dem Deckteil 12 anzuordnenden Haftlacks. Der Haftlack kann ein aktivierbarer Haftlack sein, der in der Laminier-/Kaschierstation 48, beispielsweise durch temporäre Erhitzung, aktiviert wird, um die Folie 26 fest an dem Metallband 38 anzukleben. Die Aufbringung des Haftlacks kann unmittelbar in der Laminier-/Kaschierstation 48 oder auch vorher, z.B. mit der Zuführung der Folie 26 erfolgen. Besonders bevorzugt trägt jedoch bereits das von der Bandzuführung 40 zugeführte Metallband 38 einen aktivierbaren Haftlack.

In der Laminier-/Kaschierstation 48 erfolgt eine flächige, feste Verklebung zwischen Folie 26 und Deckteil 12, wobei die Folie 26 auch nach dem Laminieren bzw. Kaschieren die Ausnehmungen 22 überdeckt. Die Folie 26 läuft somit ununterbrochen über die Ausnehmungen 22 hinweg. Im Ausführungsbeispiel der Figur 4 sind zwei Walzen 50 zuerkennen, welche beispielsweise zur Aktivierung des Haftmittels beheizbar sein können. Die Walzen 50 schließen die Folie 26 und das Metallband zwischen sich ein und rollen beim Laminieren bzw. Kaschieren über die Ausnehmungen 22 hinweg. Vorzugsweise sind nach dem Laminieren bzw. Kaschieren die Folie 26 und das Deckteil 12 über ihre gesamte Kontaktfläche hinweg miteinander verklebt, insbesondere auch in den Randabschnitten 30 nahe der Ausnehmungen 22. Auch die Deckteilinseln 24 werden dabei fest mit der Folie 26 verbunden.

In einem weiteren Verfahrensschritt wird das mit der Folie 26 verbundene Metallband 38 in eine Spritzgussmaschine 52 transportiert, welche in Figur 4 schematisch durch eine obere Formhälfte 54, eine untere Formhälfte 56 sowie eine Einspritzdüse 58 illustriert ist. Einander zugewandte Seiten (z.B. mit konkaven Vertiefungen) der Formhälften 54, 56 bilden bei geschlossener Form zusammen einen Formhohlraum, dessen Geometrie der Außenkontur des zu fertigenden Formteils 10 entspricht. Das Metallband 38 mit der Folie 26 wird zwischen den geöffneten Formhälften 54, 56 eingeführt und die Formhälften 54, 56 werden aufeinander zu bewegt und geschlossen. Anschließend wird plastifizierter thermoplastischer Kunststoff über die Düse 58 in den Formhohlraum zwischen den Hälften 54, 56 eingespritzt, genauer gesagt in den Zwischenraum oder Spalt zwischen Folie 26 und unterer Formhälfte 56.

Der eingespritzte Kunststoff kann sich sofort stoffschlüssig mit der Folie verbinden, da auch die Folie 26 aus Kunststoffmaterial gefertigt ist. Die Folie 26 ist ihrerseits in dem vorgeschalteten Schritt des Laminierens bzw. Kaschierens bereits fest mit dem Deckteil 12 verbunden worden. Insbesondere wurde eine etwaige Aktivierung eines Haftmittels zwischen Folie 26 und Deckteil 12 bereits in der Laminier-/Kaschierstation 48 ausgeführt, beispielsweise mittels Temperaturerhöhung. Eine Aktivierung von Haftmittel in der Spritzgussform 54, 56 ist somit nicht mehr erforderlich. Insbesondere kann auf Maßnahmen zur Erhitzung des Haftlacks innerhalb der Spritzgussform, beispielsweise durch eine im Stand der Technik an sich bekannte, relativ aufwendige Erhitzung einer der Formhälften 54, 56, verzichtet werden.

Prinzipiell ist es denkbar, dass mit dem beschriebenen Verfahren ein Formteil mit im Wesentlichen ebener Sichtfläche hergestellt wird, so dass die obere Formhälfte 54 im Wesentlichen plattenförmig ist und keine Vertiefung aufweist. Häufig ist jedoch ein Formteil mit gekrümmter Oberfläche zu fertigen, beispielsweise mit der in Figuren 1 bis 3 dargestellten konvexen, schalenförmigen Krümmung am Deckteil 12. Die Verformung des im Wesentlichen flachen Metallbands 38 in die Sollform kann dabei in einem dem Spritzgussschritt vorgeschalteten Verfahrensschritt (beispielsweise nach dem Laminieren bzw. Kaschieren) durch Biege-oder Kaltumformungsprozesse erfolgen. Besonders bevorzugt wird jedoch das Metallband 38 unmittelbar in der Spritzgussmaschine 52 verformt. Der Druck des plastifizierten Kunststoffs, der durch die Düse 58 in den Formhohlraum eindringt, kann das Metallband 38 zur oberen Formhälfte 54 hin drängen, bis sich das Metallband 38 an die Innenseite der oberen Formhälfte 54 anlegt und deren Kontur annimmt. Das Verformen des Metallbands 38 zur Sollform des Deckteils 12 entsprechend der Innenseite der oberen Formhälfte 54 sowie das Einspritzen des plastifizierten Kunststoffs können dann zur gleichen Zeit erfolgen.

Nach dem Erkalten des eingespritzten Kunststoffs auf eine vorbestimmte Entformungstemperatur werden die Formhälften 54, 56 wieder geöffnet und das nunmehr geformte und mit dem Kunststoff hinterspritzte Metallband 38 wird zu einer Nachbearbeitungsstation 60 weiter transportiert. Der Transport der Materialien durch die Fertigungsanlage 37 hindurch gestaltet sich in dem beschriebenen Ausführungsbeispiel besonders einfach, da bis zur Nachbearbeitungsstation 60 hin ein kontinuierliches Metallband 38 mit daran fest laminierter/kaschierter Folie 26 zu transportieren ist. Insbesondere das Einführen in die Spritzgussmaschine 52 sowie das Entformen und Abführen aus der Spritzgussmaschine 52 wird durch die Führung des kontinuierlichen Bandmaterials deutlich vereinfacht. Zur Illustration dieses Transportprinzips ist in Figur 1 mit gestrichelten Linien der Rand des kontinuierlichen Metallbands 38 angedeutet. Figur 1 entspricht somit einer Draufsicht auf das Metallband 38 bzw. das von diesem noch nicht abgetrennte Formteil 10, und zwar beispielsweise in einem Zustand nach dem Verlassen der Spritzgussmaschine 52 und vor der Nachbearbeitungsstation 60.

In der Nachbearbeitungsstation 60 wird das Metallband 38 dann entlang der Umrisslinie des zu fertigenden Formteils 10, d.h. am Randabschnitt 18 des Deckteils 12, abgetrennt, beispielsweise abgestanzt. Der verbleibende Rest des Metallbands 38 kann weiterhin ein zusammenhängendes Band bilden, aus welchem das jeweilige Formteil 10 ausgestanzt ist, so dass das verbleibende Band 38 an einer Bandabführung 62 ohne Probleme abgeführt werden kann, beispielsweise auf einer Rolle aufgewickelt werden kann.

Nach Verlassen der Nachbearbeitungsstation 60 entsteht ein Formteil 10, welches im Wesentlichen die unter Bezugnahme auf Figuren 2 und 3 beschriebene Gestalt aufweist. Dieses Formteil 10 kann in einer darauf folgenden Formteil-Bearbeitungsstation 64 weiteren Nachbearbeitungsschritten unterzogen werden, beispielsweise Oberflächenversiegelung oder Verpackung.

In der Formteilbearbeitungsstation 64 kann insbesondere die Beleuchtungsvorrichtung 35 am Trägerteil 14 montiert werden. Die Beleuchtungsvorrichtung 35 könnte alternativ zumindest teilweise in dem Kunststoffmaterial des Trägerteils 14 eingegossen sein, wozu Teile der Beleuchtungsvorrichtung 35 in die untere Formhälfte 56 der Spritzgussmaschine 52 einzusetzen wären.

Als Material für das Trägerteil 14 kommt jeder im Spritzgussverfahren verarbeitbare Kunststoff, insbesondere jeder thermoplastische Kunststoff in Frage. Die Wahl des Materials richtet sich beispielsweise nach den Anforderungen des Trägerteils hinsichtlich der Montage des Formteils 10 an einer übergeordneten Struktur. Als Material für die Folie 26 kommt prinzipiell jeder in Folienform verarbeitbare Kunststoff in Frage, an welchem der thermoplastische Kunststoff des Trägerteils 14 anspritzbar ist. Beispiele für thermoplastische Kunststoffe, welche für das Trägerteil 14 oder/und die Folie 26 verwendet werden könnten, sind Polymethylmethacrylat (PMMA) oder Polycarbonat (PC) oder Acrylnitril-Butadien-Styrol (ABS) oder andere im Bereich der Fertigung von Spritzguss-Formteilen an sich bekannte Kunststoffmaterialien. Denkbar wäre auch, für das Trägerteil 14 und die Folie 26 den gleichen Kunststoff zu verwenden.

Anzumerken ist, dass die Verformung des Deckteils 12 zu seiner Sollform während des Einspritzen des Kunststoffs vorstehend als bevorzugtes Ausführungsbeispiel beschrieben wurde. Selbstverständlich können im Rahmen der Erfindung die Deckteile 12 auch vor dem Spritzgießen geformt werden, insbesondere mit jedem an sich bekannten Formungsverfahren. Ferner könnte die Formung der Deckteile 12 auch vor dem Aufbringen der Folie 26 stattfinden, z.B. könnten anstelle des Metallbands 38 vorgeformte Deckteile 12 dem Verfahren zugeführt werden, welche mittels Greifwerkzeugen (z.B. Roboter) zwischen den Bearbeitungsstationen transportiert werden können.

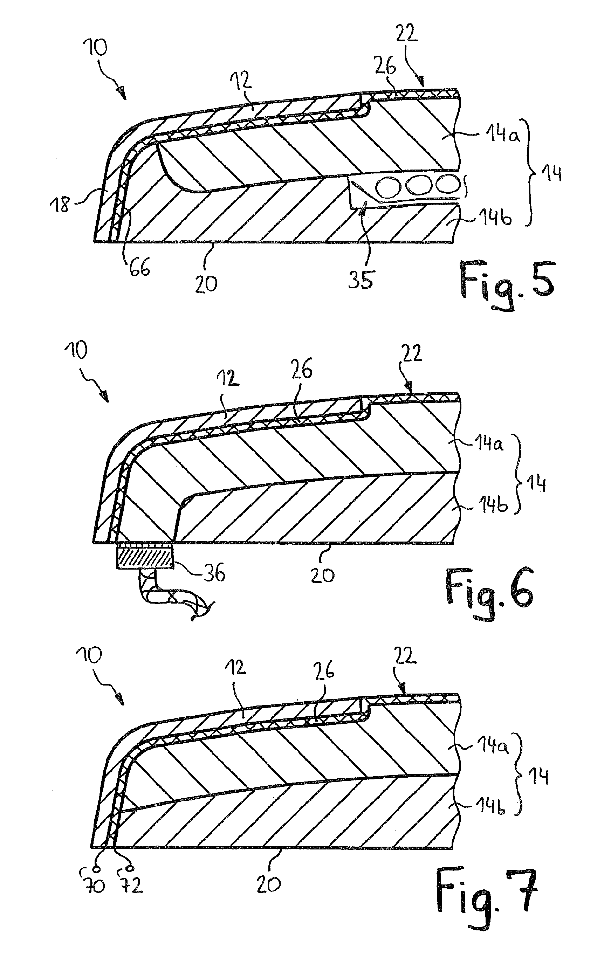

Unter Bezugnahme auf Figuren 5 bis 7 werden nachfolgend weitere Beispiele für ein Formteil beschrieben, welche Varianten des ersten Beispiels sind. Gleiche oder entsprechende Elemente wie im ersten Beispiel sind in Figuren 5 bis 7 mit gleichen Bezugszeichen bezeichnet. Im folgenden werden nur die Unterschiede zum ersten Beispiel näher erläutert, wobei hinsichtlich der übrigen Merkmale und Eigenschaften ausdrücklich auf die entsprechend geltende Beschreibung des ersten Beispiels verwiesen wird.

Figur 5 zeigt eine zweites Beispiel eines Formteils 10, umfassend einen Deckteil 12, eine die Innenseite des Deckteils 12 im Wesentlichen vollständig überdeckende und auch über Ausnehmungen 22 des Deckteils 12 hinweg verlaufende Folie 26 sowie ein Trägerteil 14, welches auf der dem Deckteil 12 abgewandten Seite der Folie 26 angeordnet ist. Eine Sichtfläche 16, 16' des Formteils 10 wird durch eine Außenseite des Deckteils 12 sowie im Bereich der Ausnehmungen 22 durch eine Außenseite der Folie 26 gebildet.

Im Unterschied zum ersten Beispiel ist das Trägerteil 14 im zweiten Beispiel aus zwei unterschiedlichen Kunststoffkomponenten gespritzt, insbesondere in einem Zwei-Komponenten-Spritzgussverfahren. Dabei wird zunächst eine erste Kunststoffkomponente 14a eingespritzt, welche einen Abschnitt der Folie 26 im Bereich der Ausnehmungen 22 sowie in den Ausnehmungen 22 benachbarten Bereichen bedeckt, wobei ein äußerer Randabschnitt 66 der Folie 26, welcher einen das Formteil 10 umlaufenden Randabschnitt 18 des Deckteils 12 bedeckt, nicht in Kontakt mit der ersten Kunststoffkomponente 14a gelangt. Anschließend wird die zweite Kunststoffkomponente 14b an die erste Kunststoffkomponente 14a angespritzt und bedeckt dabei auch den äußeren Randabschnitt 66. In einer solchen Konfiguration ist die erste Kunststoffkomponente 14a ausschließlich durch die Ausnehmungen 22 hindurch von außen zu erkennen, von der Montagefläche 20 jedoch her vollständig durch die zweite Kunststoffkomponente 14a abgedeckt.

Im zweiten Beispiel kann eine Beleuchtungsvorrichtung 35 mit einem Beleuchtungselement 36 zwischen der ersten Kunststoffkomponente 14a und der zweiten Kunststoffkomponente 14b angeordnet sein, beispielsweise direkt während des Schritts des Spritzgießens in das Trägerteil 14 integriert werden. In Figur 5 befindet sich die Beleuchtungsvorrichtung 35 in einer zu der ersten Kunststoffkomponente 14a hin offenen Vertiefung der zweiten Kunststoffkomponente 14b. Die erste Kunststoffkomponente 14a sowie die Folie 26 sind dann aus transparentem Kunststoffmaterial gebildet, so dass aus der Beleuchtungsvorrichtung 35 austretendes Licht die erste Kunststoffkomponente 14a und die Folie 26 passieren kann und durch die Ausnehmung 22 austreten kann. Vorzugsweise ist die zweite Kunststoffkomponente 14b aus einem lichtundurchlässigen Kunststoffmaterial gebildet, so dass kein Streulicht durch die Montagefläche 20 entweichen und etwa bei Montageungenauigkeiten über den Rand des Formteils 10 austreten kann.

In dem in Figur 6 gezeigten dritten Beispiel der Erfindung umfasst das Formteil 10 ebenfalls ein Deckteil 12, eine Folie 26 und ein im Zwei-Komponenten-Spritzgussverfahren hergestelltes Trägerteil 14 mit einer ersten Kunststoffkomponente 14a und einer zweiten Kunststoffkomponente 14b. Im Gegensatz zum zweiten Beispiel bedeckt im dritten Beispiel die erste Kunststoffkomponente 14a jedoch auch einen Randbereich 66 der Folie 26 und reicht damit bis zur Montagefläche 20 des Formteils 10. Ist die erste Kunststoffkomponente 14a aus einem transparenten Kunststoffmaterial gebildet, so kann mit dem dritten Beispiel der Vorteil erzielt werden, dass Licht einer Beleuchtungsvorrichtung 35 auch von der Montagefläche 20 her, beispielsweise mittels eines Lichtleiters 36, in die erste Kunststoffkomponente 14a eingeleitet werden kann und durch interne Lichtstreuung bzw. Mehrfachreflexion als diffuses, gleichmäßiges Licht aus den Ausnehmungen 22 austreten kann. Die Beleuchtungsvorrichtung 35 kann dann insbesondere auch nach dem Schritt des Spritzgießens, in der Nachbearbeitungsstation 60 oder in der Formteil-Bearbeitungsstation 64, angebracht werden.

In dem in Figur 7 gezeigten vierten Beispiel umfasst eine Formteil 10 ebenfalls ein Deckteil 12 mit Ausnehmungen 22, eine die Innenseite des Deckteils 12 bedeckende und auch die Ausnehmungen 22 überdeckende Folie 26 sowie ein im Zwei-Komponenten-Spritzgussverfahren hergestelltes Trägerteil 14. In dem Trägerteil 14 sind eine erste Kunststoffkomponente 14a und eine zweite Kunststoffkomponente 14b im Wesentlichen als plattenförmige Schichten übereinander gespritzt. Aufgrund einer konvexen Krümmung des Deckteils 12 in seinem äußeren, umlaufenden Randabschnitt 18, welche dem Deckteil 12 eine in etwa schalenförmige Gestalt verleiht, wird ein nahe der Montagefläche 20 liegender, äußerer Randabschnitt 66 der Folie 26 nur von der als zweites eingespritzten zweiten Kunststoffkomponente 14b kontaktiert, so dass auch in dem vierten Beispiel die erste Kunststoffkomponente 14a von der Montagefläche aus nicht zu sehen ist.

Im vierten Beispiel kann die Beleuchtung der Ausnehmungen 22 durch Verwendung einer elektrolumineszierenden Folie als Folie 26 erfolgen. Eine solche elektrolumineszierende Folie trägt auf ihren gegenüberliegenden Seiten jeweils dünne Elektrodenschichten, beispielsweise aus aufgedampftem, halblichtdurchlässigem Metall, wobei der zwischen den Elektroden eingeschlossene Kunststoff elektrolumineszierende Eigenschaften aufweist, so dass bei Anlegen einer Spannung zwischen den Elektroden über Kontakte 70, 72 die zwischen den Elektroden liegende Folie 26 luminesziert. In dieser Variante wirkt die Folie 26 somit gleichzeitig als Leuchtmittel.

Die Merkmale der beschriebenen Beispiele eins bis vier können beliebig miteinander kombiniert werden. Insbesondere sind die verschiedenen Varianten der Beleuchtungsvorrichtung in einem Formteil jedes der Beispiele einsetzbar, so dass beispielsweise die elektrolumineszierende Folie auch im ersten, zweiten oder dritten Beispiel zum Einsatz kommen kann. Alle beschriebenen Formteile können mit dem unter Bezugnahme auf Figur 4 erläuterten Verfahren hergestellt werden.

## Patentansprüche

1. Verfahren zur Herstellung von Formteilen, (10) wobei jedes Formteil (10) auf einer Sichtseite (16) des Formteils ein Deckteil (12) aufweist, welches mit einem Kunststoffmaterial (14) hinterspritzt ist, und wobei zwischen dem Deckteil (12) und dem hinterspritzten Kunststoffmaterial (14) eine Folie (26) angeordnet ist,
wobei das Verfahren die Schritte umfasst:
- Zuführen eines laufenden Deckteil-Bandmaterials (38);
- Zuführen eines laufenden Folien-Bandmaterials;
- Aufbringen, insbesondere Auflaminieren oder Aufkaschieren, des Folien-Bandmaterials auf einer Innenseite des Deckteil-Bandmaterials (38); und
- Hinterspritzen der beiden miteinander verbundenen Bandmaterialien (38, 26) von der Folienseite her mit dem Kunststoffmaterial in einer Spritzgussform (52),
**dadurch gekennzeichnet, dass** das Verfahren die Schritte umfasst:
- Herstellen mindestens einer Ausnehmung (22) in dem Deckteil (12),
- Aufbringen der Folie (26) auf das Deckteil (12), so dass die Folie (26) die mindestens eine Ausnehmung (22) des Deckteils (12) überdeckt,
- Hinterspritzen der Folie (26) mit dem Kunststoffmaterial (14),
- Transportieren eines aus den beiden miteinander verbundenen Bandmaterialien (38, 26) und dem hinterspritzten Kunststoffmaterial (14) gebildeten Formteil-Bandmaterials von der Spritzgussform (52) zu einer Nachbearbeitungsstation (60); und
- Trennen von die Formteile (10) bildenden Abschnitten des Formteil-Bandmaterials von einem Randabschnitt des Formteil-Bandmaterials in der Nachbearbeitungsstation (60).

2. Verfahren nach Anspruch 1, **dadurch gekennzeichnet, dass** der Schritt des Hinterspritzen in einer Spritzgussform (52) erfolgt und dass die Folie (26) vor dem Erreichen der Spritzgussform (52) auf der Innenseite des Deckteils (12) durch Laminieren oder Kaschieren, insbesondere unter Temperaturerhöhung, aufgebracht wird.

3. Verfahren nach Anspruch 1 oder Anspruch 2, **dadurch gekennzeichnet, dass** das Deckteil (12) mindestens eine Deckteilinsel (24) aufweist, welche durch die mindestens eine Ausnehmung (22) vom übrigen Bereich des Deckteils (12) getrennt ist, wobei die Deckteilinsel (24) mit der Folie (26) in Verbindung gebracht wird und während des Schritts des Hinterspritzens des Deckteils (12) von der Folie (26) in Position gehalten wird.

4. Verfahren nach einem der Ansprüche 1 bis 3, **dadurch gekennzeichnet, dass** der hinterspritzte Kunststoff (14) und die Folie (24) lichtdurchlässig oder halblichtdurchlässig sind oder/und lumineszierende Eigenschaften aufweisen.

5. Verfahren nach einem der Ansprüche 1 bis 4, **dadurch gekennzeichnet, dass** das Deckteil (12) eine metallische Sichtfläche (16) aufweist, insbesondere aus einem Metallblech gebildet ist.

6. Verfahren nach einem der Ansprüche 1 bis 5, **dadurch gekennzeichnet, dass** die mindestens eine Ausnehmung (22) durch Ausstanzen hergestellt ist.

## Claims

1. Method for producing moulded parts (10), each moulded part (10) comprising a cover part (12) on a visible side (16) of the moulded part, which is back-injection-moulded with a plastics material (14), and a film (26) being arranged between the cover part (12) and the back-injection-moulded plastics material (14),
the method comprising the steps of:
- feeding a continuous cover part strip material (38);
- feeding a continuous film strip material;
- applying, in particular laminating or lamination coating, the film strip material to an inner side of the cover part strip material (38); and
- back-injection-moulding the two interconnected strip materials (38, 26) with the plastics material, from the film side, in an injection mould (52),
**characterised in that** the method comprises the steps of:
- making at least one recess (22) in the cover part (12),
- applying the film (26) to the cover part (12) such that the film (26) covers the at least one recess (22) in the cover part (12),
- back-injection-moulding the film (26) with the plastics material (14),
- transporting a moulded part strip material, which is formed from the two interconnected strip materials (38, 26) and the back-injection-moulded plastics material (14), from the injection mould (52) to a post-processing station (60); and
- separating portions of the moulded part strip material, which form the moulded parts (10), from an edge portion of the moulded part strip material in the post-processing station (60).

2. Method according to claim 1, **characterised in that** the back-injection-moulding step is carried out in an injection mould (52), and **in that** the film (26) is applied to the inner side of the cover part (12) by laminating or lamination coating, in particular at an increased temperature, prior to reaching the injection mould (52).

3. Method according to either claim 1 or claim 2, **characterised in that** the cover part (12) comprises at least one cover part island (24) which is separated from the remaining region of the cover part (12) by the at least one recess (22), the cover part island (24) being brought into connection with the film (26) and being held in position by the film (26) during the step of back-injection-moulding the cover part (12).

4. Method according to any of claims 1 to 3, **characterised in that** the back-injection-moulded plastics material (14) and the film (24) are transparent or semi-transparent and/or have luminescent properties.

5. Method according to any of claims 1 to 4, **characterised in that** the cover part (12) comprises a metallic visible surface (16), in particular formed from sheet metal.

6. Method according to any of claims 1 to 5, **characterised in that** the at least one recess (22) is made by means of punching out.

## Revendications

1. Procédé de fabrication de pièces moulées (10), chaque pièce moulée (10) présentant sur un côté visible (16) de la pièce moulée une partie de couverture (12) qui est injectée par l'arrière avec un matériau de matière plastique (14), et une feuille (26) étant disposée entre la partie de couverture (12) et le matériau de matière plastique (14) injecté par l'arrière,
le procédé comprenant les étapes suivantes :
- amenée d'un matériau en bande (38) de partie de couverture défilant;
- amenée d'un matériau en bande de feuille défilant;
- application, en particulier stratification ou contrecollage, du matériau en bande de feuille sur un côté intérieur du matériau en bande (38) de partie de couverture ; et
- injection par l'arrière des deux matériaux en bande (38, 26), raccordés l'un à l'autre, à partir du côté feuille, avec le matériau de matière plastique dans un moule d'injection (52),
**caractérisé en ce que** le procédé comprend les étapes suivantes :
- réalisation d'au moins un creux (22) dans la partie de couverture (12),
- application de la feuille (26) sur la partie de couverture (12) de telle sorte que la feuille (26) recouvre le creux (22) au moins au nombre de un de la partie de couverture (12),
- injection par l'arrière de la feuille (26) avec le matériau de matière plastique (14),
- transport, depuis le moule d'injection (52) vers un poste de traitement complémentaire (60), d'un matériau en bande de pièce moulée formé des deux matériaux en bande (38, 26) raccordés l'un à l'autre et du matériau de matière plastique (14) injecté par l'arrière ; et
- découpe de tronçons du matériau en bande de pièce moulée formant les pièces moulées (10) à partir d'un tronçon marginal du matériau en bande de pièce moulée dans le poste de traitement complémentaire (60).

2. Procédé selon la revendication 1, **caractérisé en ce que** l'étape de l'injection par l'arrière s'effectue dans un moule d'injection (52) et **en ce que** la feuille (26) est, avant d'atteindre le moule d'injection (52), appliquée sur le côté intérieur de la partie de couverture (12) par stratification ou contrecollage, en particulier avec une augmentation de température.

3. Procédé selon la revendication 1 ou la revendication 2, **caractérisé en ce que** la partie de couverture (12) présente au moins un ilot de partie de couverture (24) qui est séparé du reste de la zone de la partie de couverture (12) par le creux (22) au moins au nombre de un, l'ilot de partie de couverture (24) étant mis en liaison avec la feuille (26) et maintenu en position par la feuille (26) pendant l'étape de l'injection par l'arrière.

4. Procédé selon l'une des revendications 1 à 3, **caractérisé en ce que** le matériau (14) injecté par l'arrière et la feuille sont transparents ou semi-transparents et/ou présentent des caractéristiques luminescentes.

5. Procédé selon l'une des revendications 1 à 4, **caractérisé en ce que** la partie de couverture (12) présente un côté visible (16) métallique, elle est en particulier formée d'une tôle métallique.

6. Procédé selon l'une des revendications 1 à 5, **caractérisé en ce que** le creux (22) au moins au nombre de un est fabriqué par poinçonnage.
